# EUROPEAN PATENT APPLICATION

(11) **EP 4 657 914 A1**
(43) Date of publication of application: **03.12.2025**
(21) Application number: 24747488.5
(22) Date of filing: 26.01.2024
(51) Int. Cl.: H04W 24/02, H04W 8/24, H04B 7/06, G06N 3/0455, G06N 3/0464, G06N 20/00

(54) **METHOD AND DEVICE FOR MODEL TRANSFER IN WIRELESS COMMUNICATION SYSTEM**

(30) Priority: 27.01.2023 KR 20230011155
(71) Applicant: LG Electronics Inc., Yeongdeungpo-gu Seoul 07336 (KR)
(72) Inventor: KANG, Jiwon, Seoul 06772 (KR); KIM, Hyungtae, Seoul 06772 (KR); PARK, Haewook, Seoul 06772 (KR)
(74) Representative: Jung, Minkyu
(86) International application number: PCT/KR2024/001296
(87) International publication number: WO 2024/158255

(57) **Abstract**

A method carried out by a first device in a wireless communication system, according to one embodiment of the present disclosure, comprises the steps of: receiving information for at least one model from a second device; and determining a model application time (MAT) associated with the at least one model. The MAT is determined on the basis of at least one of i) a model transfer type, ii) a number of model transfers, iii) a number of the at least one model, and/or iv) a model transfer unit.

## Description

### [TECHNICAL FIELD]

The present disclosure relates to a method and a device for a model transfer in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

A communication function can be implemented based on a model (s). In this regard, a model transfer/delivery can be performed. For example, a model (or information for the model) can be transferred from a first device (e.g., a terminal, a base station, or a first terminal) to a second device (e. g., a base station or a terminal, or a second terminal).

### [DISCLOSURE]

### [TECHNICAL PROBLEM]

When a time point at which an operation based on a transferred/delivered model may be performed is consistently determined/defined and used, it may be inefficient in terms of reliability/latency of a communication function. For example, after a specific model transfer is performed, a time required to apply/use the model (e.g., a time required for compile of the transferred model) may vary depending on a model structure, the number of models, a capability of a subject receiving the model, and the like. That is, the following problems may arise if a consistently defined time point is utilized for all models (and/or all model transfers/deliveries).

As an example, it may be assumed that the time point consistently defined for all models (and/or all model transfers/deliveries) is earlier than the time required to apply/use the specific particular model delivered. In this case, an operation based on the specific model may be triggered at a time point when using the specific model is not possible (a time point when a preparation for application/use of the specific model is not completed). Therefore, the operation based on the specific model may not normally be performed or additional signaling may be caused after a time point when or the specific model is applicable.

As an example, it may be assumed that the time point consistently defined for all models (and/or all model transfers/deliveries) is later than the time required to apply/use the specific particular model delivered. In this case, the time point when the operation based on the specific model is performed may be later than the time point when the preparation for use/application of the specific model is completed. That is, unnecessary delay may occur until the operation based on the specific model is initiated.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a first device in a wireless communication system according to an embodiment of the present disclosure comprises receiving information for at least one model from a second device, and determining a model application time (MAT) related to the at least one model.

The MAT is determined based on at least one of i) a model transfer type, ii) a number of model transfers, iii) a number of the at least one model, and/or iv) a model transfer unit.

The MAT may be a time related to a time from a reference time point to a time point at which validation, testing, application, deployment, or compilation of the one or models is completed by the first device.

The reference time point may be i) a time point at which a model transfer procedure is triggered or initiated by the second device, ii) a time point at which the first device transmits a response to the triggering of the model transfer procedure, iii) a time point at which the transmission of the information is initiated, iv) a time point at which the transmission of information is completed, or v) a time point at which the first device transmits a response to the reception of the information.

The MAT may be a time required for the first device to activate, apply or prepare a model or a function related to the model.

The method may further comprise reporting, to the second device, information for a minimum MAT supported by the first device, and receiving information related to the MAT from the second device.

The MAT may be greater than or equal to the minimum MAT.

The model transfer type may be defined based on whether the information includes information for a structure related to the one or models.

The information may include information for a parameter related to the one or models based on the model transfer type being a first type.

The information may include i) information for the parameter and ii) information for the structure based on the model transfer type being a second type.

The MAT related to the second type may be greater than the MAT related to the first type.

The number of model transfers may be related to whether the transfer of the at least one model based on the information being an initial transfer.

The MAT related to the initial transfer may be greater than the MAT related to the number of model transfers which is 2 or more.

Based on the number of the at least one model being greater than a defined number, the MAT may be determined based on a priority related to each model.

The priority may be defined based on at least one of i) a start time point of a model transfer related to each model, ii) a functionality related to each model, iii) the model transfer type, iv) the number of model transfers, and/or v) an ID of each model.

The model transfer unit may be related to the number of models which may be simultaneously transferred to the first device.

The MAT may be determined as a first MAT based on the number of the at least one model which is smaller than or equal to the model transfer unit. The MAT may be determined as a second MAT based on the number of the at least one model which is greater than the model transfer unit. The second MAT may be greater than the first MAT.

A first device operating in a wireless communication according to another embodiment of the present disclosure comprises one or more transceivers, one or more processors, and one or more memories connected to the one or more processors and storing instructions.

The instructions configure the one or more processors to perform all steps of any one of the methods based on being executed by the one or more processors.

A device according to another embodiment of the present disclosure comprises one or more memories and one or more processors operably connected to the one or more memories.

The one or more memories store instructions that configure the one or more processors to perform all steps of any one of the methods based on being executed by the one or more processors.

One or more non-transitory computer readable mediums according to another embodiment of the present disclosure stores instructions. The instructions executable by one or more processors configure the one or more processors to perform all steps of any one of the methods.

A method performed by a second device in a wireless communication system according to another embodiment of the present disclosure comprises transmitting information related to at least one more models to a first device, and determining a model application time (MAT) related to the at least one model.

The MAT is determined based on at least one of i) a model transfer type, ii) a number of model transfers, iii) a number of the at least one model, and/or iv) a model transfer unit.

A second device operating in a wireless communication according to another embodiment of the present disclosure comprises one or more transceivers, one or more processors, and one or more memories connected to the one or more processors and storing instructions.

The instructions configure the one or more processors to perform all steps of the method based on being executed by the one or more processors.

### [ADVANTAGEOUS EFFECTS]

According to an embodiment of the present disclosure, when a transfer/delivery of a specific model is performed, an application time point of the specific model becomes clear. It can be expected that an operation/communication function based on the delivered model is normally performed based on the application time point, and a reliability of the operation/communication function can be ensured.

In addition, unnecessary delay/signaling overhead in the performance of the operation/communication function based on the delivered model can be reduced.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG. 1 illustrates a functional framework of an AI/ML model.
FIG. 2 illustrates a signaling procedure according to an embodiment of the present disclosure.
FIG. 3 is a flow chart illustrating a method performed by a user equipment according to an embodiment of the present disclosure.
FIG. 4 is a flow chart illustrating a method performed by a base station according to another embodiment of the present disclosure.
FIG. 5 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### AI/ML related Description

With the technological advancement of artificial intelligence/machine learning (AI/ML), node(s) and UE(s) constituting a wireless communication network are becoming more intelligent/advanced.

In particular, due to the intelligence of networks/base stations, it is expected that various network/base station decision parameters can be quickly optimized and derived/applied based on various environmental parameters.

The environmental parameters may include at least one of distribution/location of base stations, distribution/location/material of buildings/furniture, etc., location/movement direction/speed of UEs, or climate information. However, the above-described parameters are only examples, and the environmental parameters may further include other environmental parameters related to the network/base station decision parameters in addition to the listed parameters.

The network/base station decision parameters may include at least one of transmission/reception power of each base station (BS), transmission power of each UE, precoder/beam of BS/UE, time/frequency resource allocation for each UE, or duplex method of each BS. However, the above-described parameters are only examples, and the network/base station decision parameters may further include other parameters determined by the network/base station in addition to the listed parameters.

In line with this trend, many standardization organizations (e.g., 3GPP, O-RAN) are considering introduction of AI/ML, and studies on this are also actively underway.

The AI/ML may be easily referred to as artificial intelligence based on deep learning in a narrow sense, but conceptually, it may be classified as below.
- Artificial Intelligence: it is any automation that allows machines to do the work that people would otherwise do.
- Machine Learning: it refers to a technology in which machines learn patterns for decision-making from data on their own without explicitly programming rules.
- Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

As above, artificial intelligence (AI) is the broadest concept of AI/ML, and deep learning is the narrowest concept of AI/ML. Machine learning (ML) may be interpreted as a narrower concept than artificial intelligence and a broader concept than deep learning.

### Types of AI/ML based on various criteria

### - Offline vs Online

### Offline Learning

- Offline learning faithfully follows a sequential procedure of database collection, learning, and prediction. That is, the collection and learning may be performed offline, and the completed program may be installed in the field and used for prediction work. In most situations, such offline learning methods are used.

### Online Learning

- Online learning refers to a method of gradually improving performance by incrementally learning with additional data generated, taking advantage of the fact that data that can be used for recent learning is continuously generated via the Internet.

### Classification based on AI/ML Framework concept

### - Centralized Learning

In centralized learning, when training data collected from multiple different nodes is reported to a centralized node, all data resources/storage/learning (e.g., supervised learning, unsupervised learning, reinforcement learning, etc.) are performed in one centralized node.

### - Federated Learning

Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node.

In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.

### - Distributed Learning

Distributed learning refers to a concept that machine learning processes are scaled and distributed across a cluster of nodes. Training models are shared across multiple nodes split and operating simultaneously to speed up model training.

Classification according to learning method

### - Supervised Learning

Supervised learning is a machine learning task that aims to learn a mapping function from input to output, given a labeled data set. The input data is called training data and has known labels or results. Examples of the supervised learning are as follows.
1) Regression: Linear Regression, Logistic Regression
2) Instance-based Algorithms: k-Nearest Neighbor (KNN)
3) Decision Tree Algorithms: CART
4) Support Vector Machines: SVM
5) Bayesian Algorithms: Naive Bayes
6) Ensemble Algorithms: Extreme Gradient Boosting, Bagging: Random Forest

Supervised learning may be further grouped into regression and classification problems, where classification is predicting labels and regression is predicting quantities.

### - Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).

### - Reinforcement Learning

In reinforcement learning (RL), an agent aims to optimize long-term goals by interacting with the environment based on a trial and error process, and is goal-oriented learning based on interaction with the environment. Examples of RL algorithm are as follows.
1) Q-learning
2) Multi-armed bandit learning
3) Deep Q Network
4) State-Action-Reward-State-Action (SARSA)
5) Temporal Difference Learning
6) Actor-critic reinforcement learning
7) Deep deterministic policy gradient
8) Monte-Carlo tree search

The reinforcement learning can be additionally grouped into model-based reinforcement learning and model-free reinforcement learning.

Model-based reinforcement learning: it refers to an RL algorithm that uses a predictive model, and obtains the transition probabilities between states using various dynamic states of the environment and a model in which these states lead to rewards.

Model-free reinforcement learning: it refers to a RL algorithm based on value or policy that achieves the maximum future reward. Multi-agent environments/states are computationally less complex and do not require an accurate representation of the environment.

RL algorithms can also be classified into value-based RL vs. policy-based RL, policy-based RL vs. non-policy RL, etc.

### Representative Model of Deep Learning

### 1. Feed-Forward Neural Network (FFNN)

FFNN consists of an input layer, a hidden layer, and an output layer.

### 2. Recurrent Neural Network (RNN)

RNN is a type of artificial neural network in which hidden nodes are connected to directed edges to form a directed cycle. It is a model suitable for processing data that sequentially appears, such as voice and text.

### 3. Convolution Neural Network (CNN)

CNN is used for two purposes of reducing model complexity and extracting good features by applying convolution operations generally used in video processing or image processing fields.
- Kernel or filter: it refers to a unit/structure that applies weight to an input of a specific range/unit.
- Stride: it refers to a range of movement of the kernel within the input.
- Feature map: it refers to a result of applying the kernel to the input.
- Padding: it refers to a value added to adjust the size of the feature map.
- Pooling: it refers to an operation to reduce the size of the feature map by downsampling the feature map (e.g., max pooling, average pooling).

### 4. Auto Encoder

An auto encoder refers to a neural network that receives a feature vector x as input and outputs the same or similar vector x'. An input node and an output node of the auto encoder have the same feature.

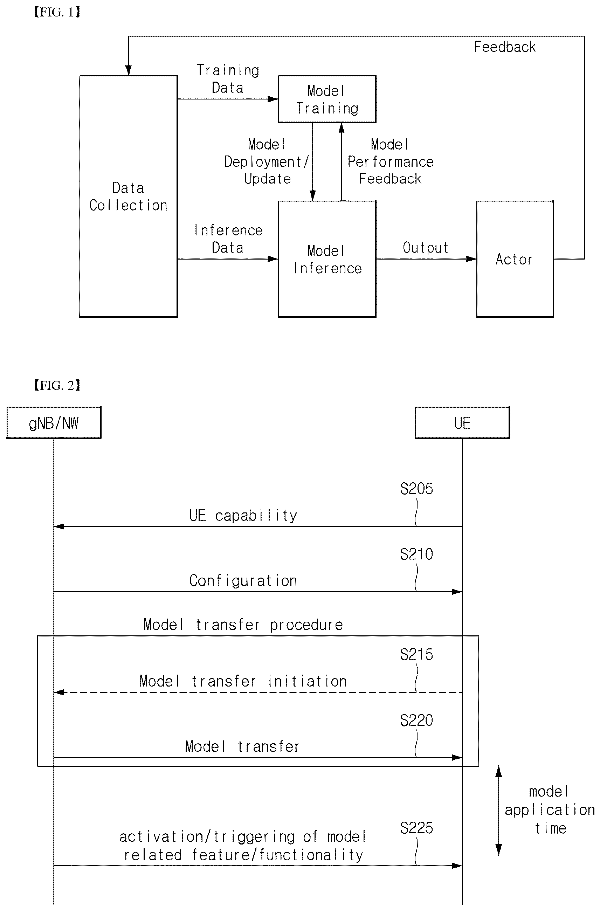

FIG. 1 illustrates a functional framework of an AI/ML model.

In the functional framework illustrated in FIG. 1, the definition of each term and the operation of each function may be based on Table 1 below.

**[Table 1]**

| |
|---|
| Data collection: Data collected from the network nodes, management entity or UE, as a basis for ML model training, data analytics and inference. |
| ML Model: A data driven algorithm by applying machine learning techniques that generates a set of outputs consisting of predicted information, based on a set of inputs |
| ML Training: An online or offline process to train an ML model by learning features and patterns that best present data and get the trained ML model for inference. |
| ML Inference: A process of using a trained ML model to make a prediction or guide the decision based on collected data and ML model. |
| • Data Collection is a function that provides input data to Model training and Model inference functions. AI/ML algorithm specific data preparation (e.g., data pre-processing and cleaning, formatting, and transformation) is not carried out in the Data Collection function. |
| Examples of input data may include measurements from UEs or different network entities, feedback from Actor, output from an AI/ML model. |
| ∘ Training Data: Data needed as input for the AI/ML Model Training function. |
| ∘ Inference Data: Data needed as input for the AI/ML Model Inference function. |
| • Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. |
| ∘ Model Deployment/Update: Used to initially deploy a trained, validated, and tested AI/ML model to the Model Inference function or to deliver an updated model to the Model Inference function. |
| ▪ Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study. |
| • Model Inference is a function that provides AI/ML model inference output (e.g. predictions or decisions) . Model Inference function may provide model performance feedback to Model Training function when applicable. The Model inference function is also responsible for data preparation (e.g. data pre-processing and cleaning, formatting, and transformation) based on Inference Data delivered by a Data Collection function, if required. |
| ∘ Output: The inference output of the AI/ML model produced by a Model Inference function. |
| ▪ Note: Details of inference output are use case specific. |
| ∘ Model Performance Feedback: It may be used for monitoring the performance of the AI/ML model. |
| ▪ Note: Details of the Model Performance Feedback process are out of RAN3 scope. |

| |
|---|
| • Actor is a function that receives the output from the Model inference function and triggers or performs corresponding actions. The Actor may trigger actions directed to other entities or to itself. |
| ∘ Feedback: Information that may be needed to derive training or inference data or performance feedback. |

### Data Set

A data set used in AI/ML is classified into training data, validation data, and test data, and their definition is as follows.

### - Training data

Data set for training a model

### - Validation data

Data set for verifying a model whose training has been already completed

The validation data is a data set usually used to prevent over-fitting of a training data set.

The validation data is a data set for selecting the best among various models trained during the training process. Therefore, the validation data may be seen as a data set related to training.

### - Test data

The test data is a data set for final evaluation. The test data is independent of training.

The data set may use a training set including the above-described data in a predetermined ratio.

For example, a training set including training data and validation data in a ratio of 8:2 or 7:3 may be used.

For example, a training set including training data, validation data, and test data in a ratio of 6:2:2 may be used.

### Collaboration level

A collaboration level can be defined as following table 2 depending on whether the AI/ML function between a base station and a UE is capable.

**[Table 2]**

| |
|---|
| **Cat 0a)** No collaboration framework: AI/ML algorithms purely implementation based and not requiring air-interface changes. -> Baseline |
| **Cat 0b)** No collaboration framework with modified Air-Interface catering to efficient implementation-based AI/ML algorithms. |
| **Cat 1)** Inter-node assistance to improve the respective nodes' AI/ML algorithms. This would apply to UEs getting assistance from gNBs (for training, adaptation, etc.) and vice-versa. This level does not require model exchange between network nodes. |
| **Cat 2)** Joint ML operation between UEs and gNBs. This level requires AI/ML model instruction or exchange between network nodes. |

The collaboration levels shown in Table 2 are examples and may be modified and utilized differently from the illustrated examples based on the implementation method. For example, a collaboration level that combines two or more of the illustrated collaboration levels may be defined/utilized. For example, collaboration level(s) excluding one or more of the illustrated collaboration levels may be utilized.

In recent years, attempts to apply an artificial intelligence/machine learning (AI/ML) technology to wireless communication networks have been active. In particular, in 3GPP Rel-18, a study began to apply the AI/ML technology to an air interface between the UE and the network. As main use cases that combine AI/ML into the air interface in that study, beam management (BM), CSI acquisition, and positioning are considered, and the present disclosure proposes a method for determining, at the time of transferring an AI/ML model, an application time point of a corresponding model.

The embodiments described below are not limited to the case where the AI/ML model is transferred. As an example, the embodiments described below may also be applied to a case where a model(s) implementing the communication function is transferred. As an example, the embodiments described below may also be extended and applied to a case where a model(s) related to a communication function is transferred. Hereinafter, the "AI/ML model" may be interpreted/replaced as a "model", a "model related to a (specific) communication function", a " model for a (specific) telecommunication function", a "model related to (specific) a communication procedure", or a "model for (specific) a telecommunication procedure".

In the present disclosure, '/' means 'and', 'or', or 'and/or' according to a context. In the present disclosure, "terminal" and "UE" may be used interchangeably in the same/similar sense, and "base station", "network", and "TRP" may also be used interchangeably in the same/analogous sense from an air-interface point of view.

In a 3GPP Rel-18 AI/ML study item, it is agreed that two terms related to the model transfer operation between devices/entities, 'model transfer' and 'model delivery', are defined as shown in Table 3 below.

Specifically, both terms mean an inter-device/entity model transfer operation. 'Model transfer' is defined as a transfer through an air interface. On the other hand, 'model delivery' is a term that encompasses model delivery through means other than the air interface.

Embodiments of the present disclosure are mainly described with a "model transfer" operation as a target, but this is only for convenience of description and is not intended to limit the scope of application of the embodiments of the present disclosure. The embodiments of the present disclosure may also be applied to a 'model delivery" operation. Thus, hereinafter, "model transfer" may be interpreted/replaced as "model delivery".

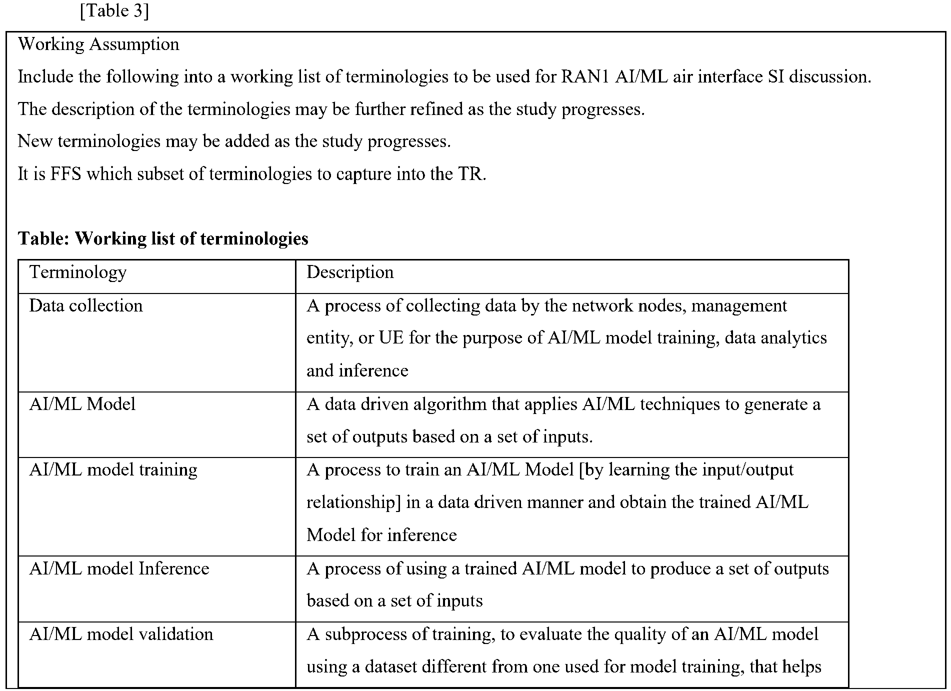

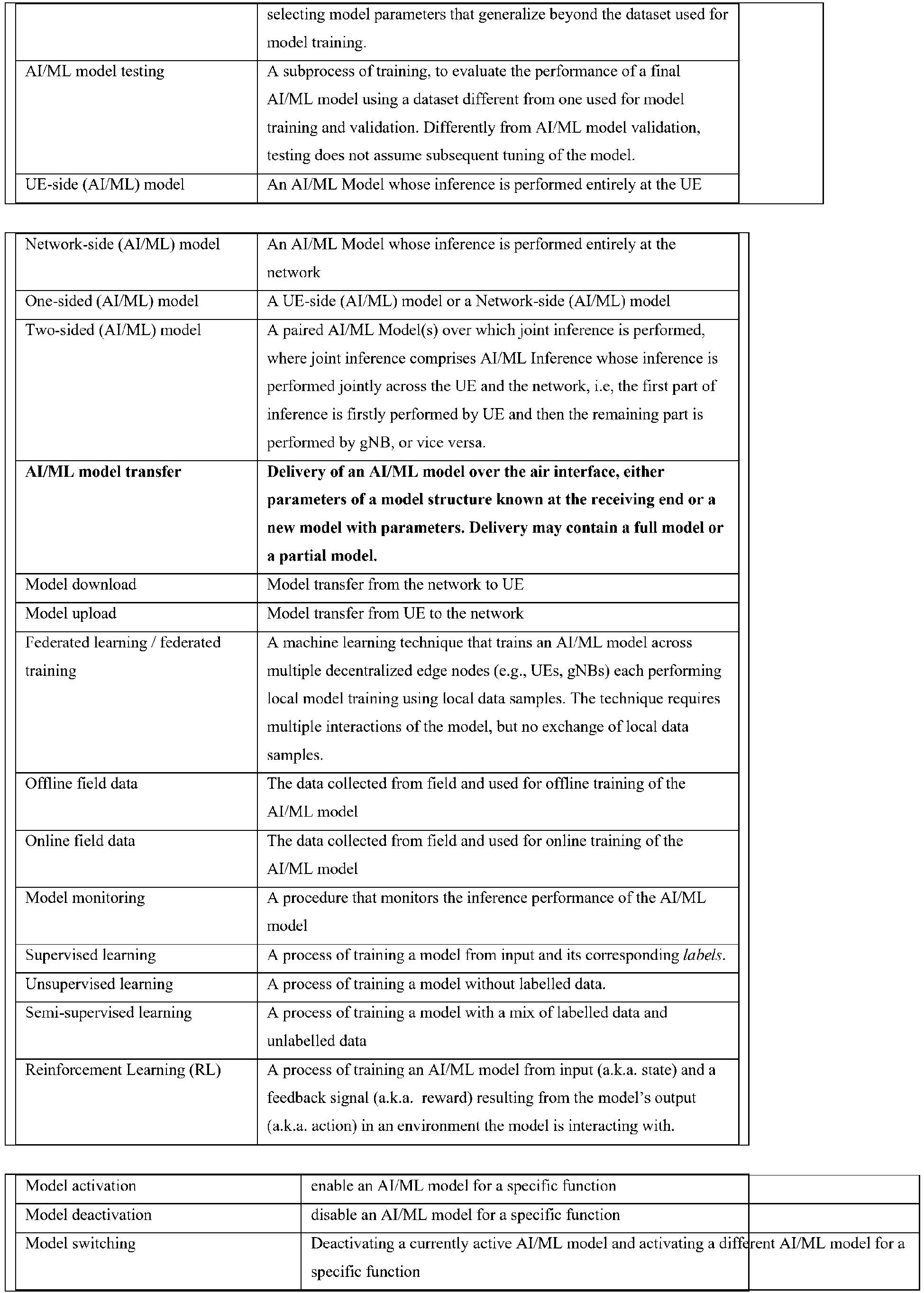

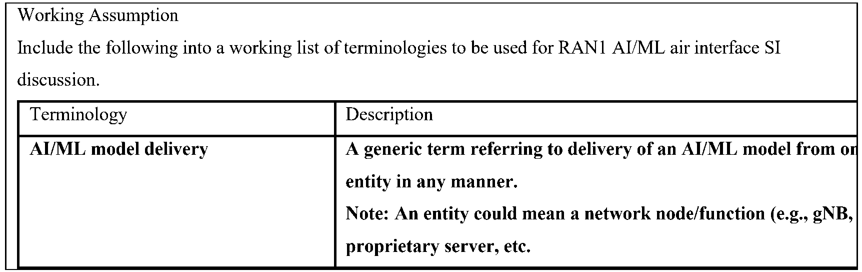

The problem to be solved by the present disclosure is as follows.

When an AI/ML model training subject and an inference subject are different, a model transfer from the training subject to the inference subject may occur. At this time, it should be promised from which time point the transferred model is applicable. Specifically, a time point at which a related operation/function may be enabled may be identified only when an applicable time point of a model transferred between a subject transferring the model and a subject receiving the model is promised.

Hereinafter, in the present disclosure, description will be made on the assumption that the subject that transfers the model is a base station/network (NW) (any entity in a group), and the subject that receives the model is a terminal. However, this is for convenience of description, and as described above, the embodiments of the present disclosure may also be applied to transfer operations based on other device/entity combinations (e.g., UE → BS (NW), UE2 → UE1). That is, in the following embodiments, the "terminal" may be replaced by the base station (NW) or a first terminal, and the "base station" may be replaced with the terminal or a second terminal.

The model transfer operation may be classified into several types. With reference to the definition of the 'model transfer', the model transfer operation may be classified as follows.

As an example, the model transfer operation may be divided into i) a transfer operation for a 'full model' and ii) a transfer operation of a 'partial model'.

As an example, the model transfer operation may be divided into a) a transfer operation on a model parameter in a specific model structure (hereinafter referred to as parameter transfer for convenience) and b) a transfer operation for the model parameter and the model structure.

A more detailed classification of three or more steps may also be possible, rather than a two-step classification as above.

As an example, the model transfer operation may be distinguished based on at least one of the above-described examples (at least one of i), ii), a) and/or b above). As a specific example, the model transfer operation may be a transfer operation for a model parameter and/or model structure related to the full model/partial model.

As described above, a type (model transfer type) related to the model transfer may be based on at least one of i) a type of model (e.g., full model/partial model) and/or ii) a type of information related to the model (e. g., model parameter/model structure/model parameter and model structure).

Various model transfer types described above may be considered for an application start time point (hereinafter, referred to as model application time (MAT)) of the transferred model to be solved in the present disclosure.

Here, the MAT may refer to a time taken/required for a device receiving a model transfer to actually apply/deploy the transferred model based on a specific time point related to the model transfer. The base station may expect/anticipate the terminal to apply/deploy the transferred model after the corresponding time point by the defined/configured MAT.

As an example, the specific time point may be i) a time point when the base station triggers/initiates a transfer to the terminal, ii) a time point at which the terminal sends an ACK in response to the transfer indication, iii) a time points at which model-related data transmission from the base station to the terminal is started/completed, or iv) a time point at which the terminal sends to the base station that model data reception is normally completed (e.g., an ACK for the corresponding data).

After the time points based on the above-described examples, the terminal may report a model deployment completion related message to the base station (e.g., allocate a corresponding report related UL resource).

The reason why MAT is required is as follows. The reason is that after decoding, interpretation, validation, and/or testing/compiling for transferred model data (e.g., structure and parameter), the corresponding model should be able to be applied/deployed. A time required for such a process will vary depending on the model type described above. For example, when defining two types of models described below, the MAT required for Type2 is inevitably greater than the MAT for Type1. Thus, Method 1 below is proposed.
Type1: model parameter transfer
Type2: model structure + parameter transfer

### Method 1

A plurality of model transfer types may be defined. Separate/different MATs may be defined/configured for each model transfer type.

As an example, different MATs may be defined/configured according to whether a transfer for model structure information is included (whether model structure information is transferred), such as classification of type1 and type2. That is, MAT1 related to Type1 and MAT2 related to Type2 may be defined/configured. As a specific example, the MAT (MAT1 or MAT2) may be determined based on the model transfer type (Type1/Type2).

Here, the model structure information may include one or more of i) model structure information such as RNN, CNN, and auto encoder, ii) the number of hidden layers for the same structure, iii) information for the number of nodes for each layer, iv) input/output parameter configuration information, and/or v) pre-/post-processing related information.

The model transfer including the model structure (e.g., Type2) preferably adopts a larger MAT with a larger model data size, a time taken to interpret and deploy the structure for the corresponding model, a larger model validation/test/compile time, and/or additional validation/test procedures, etc. As an example, example, the MAT2 related to model transfer Type2 may be defined/configured to be larger than the MAT1 related to model transfer Type1.

MATs may be different which are required for a case where an initial transfer for a model is made as well as the type of model and a case where a transfer for updating a model is made after one or more transfers are made. This is because a first model transfer between specific devices may contain more information regarding the model than a model transfer that takes place thereafter. And/or, even with the same amount of information, the first model transfer may require more time for validation/testing/compile for the corresponding model in the subject receiving the model. Accordingly, the following is proposed.

### Method 2

Different model application times (MATs) may be defined/configured according to the number of model transfers. As an example, a separate/different MAT may be defined/configured depending on a first model transfer or second or more model transfers for the device.

The terminal/device may simultaneously drive a plurality of AI/ML models for the same or multiple functions/functionalities/use cases. For example, the plurality of AI/ML models may include i) one model for CSI prediction, ii) one model for beam prediction, and/or iii) one model for CSI compression.

Transfers for the models may also be made from the same or different base stations at the same time/overlapping times. In this case, according to terminal implementation, model transfer related processing (e.g. interpretation, verification, compile, etc.) may be sequentially made. Different MATs may be defined/configured according to the corresponding model transfer related processing.

The terminal may not receive a transfer for (some) models due to lack of memory/processing power. Accordingly, the following method is proposed.

### Method 3

Transfers for a plurality of models may occur simultaneously. In this case, a different MAT may be defined/configured according to the number of models transferred at the same time (and a priority of the model). As an example, a different MAT may be defined/configured based on the number of models transferred at the same time and/or the priority of each model transferred (e.g., the priority of each of the plurality of models transferred at the same time).

And/or, it is possible to prevent the model transfer for a specific number or more of models from being received or expected to be received. As an example, the terminal may not receive some model(s) of the plurality of models that are simultaneously transferred (according to the priority of the model). As an example, the terminal may not expect models of a predetermined number or more to be transferred simultaneously. The base station may transmit models of only less than a predetermined number to the terminal at the same time.

According to Method 3, the MAT for all models may be increased, or a different MAT may be applied for each model.

As an example, when transfers of a plurality of models occur at the same time, the MAT for all models may be increased so that the terminal may receive/deploy the model sequentially. As an example, when the transfers of the plurality of models occur at the same time, a different MAT may be applied for each model by prioritizing from which model to receive/deploy. A high priority model and a preferentially deployed/compiled model may be defined/configured with a small MAT value. A low priority model and a later deployed/compiled model may be defined/configured with a large MAT value.

Hereinafter, embodiments for reducing an implementation burden of the terminal will be described. The following embodiment(s) may be additionally applied to the above-described embodiments or may be applied independently from the above-described embodiment.

According to an embodiment, when model transfers of a specific number or more occur, a rule may be defined/configured such that the terminal performs model transfers up to a predetermined number and does not receive transfers for the remaining models.

According to an embodiment, the terminal may not expect that the model transfers of the specific number or more occur.

According to an embodiment, when the model transfers of the specific number or more occur, a rule may be defined not to receive transfers for either of the models.

According to an embodiment, when the model transfers of the specific number or more occur, a rule may be prescribed not to expect to receive the transfers for all of the models.

The 'priority of the model' may be configured/defined by considering one or more of the following factors:
- Model transfer start time point (e.g. define/configure an MAT for model 2 to a value greater than an MAT for model 1 when a transfer for model 1 starts earlier than a transfer for model 2)
- (Importance/urgency of) related functionality

For example, when transfers to multi-models occur, which model for a function to preferentially deploy/compile may be determined according to a predefined priority rule, or determined according to an order configured/indicated by the base station. In this case, an MAT for functionality 1 and an MAT for functionality 2 may be configured/defined differently. As an example, even with the same functionality, a model for PCell/PScell may be defined/configured to take precedence over a model for SCell.
- Model transfer type (e.g., model transfer type based on whether the model transfer type includes a model structure transfer)
- Number of model transfers (e.g., whether the model transfer is an initial model transfer)
- Model ID order (e.g. prioritizing low/high ID)
- Priority of model set by base station

According to an embodiment, in proportion to the number of models transferred at the same time, MATs of the models may be defined/configured/increased. As an example, a receiving device may optionally determine which model to deploy first. As example, the increase in MAT may not consider the priority of the model described above. As example, the increase in MAT may be performed based on the priority of the model described above.

According to an embodiment, the terminal may be prescribed/defined so as not to receive or not expect to receive a transfer to a partial model/full model.

According to a terminal implementation, model transfer related processing for a plurality of models may be performed simultaneously. For such a terminal, processing may be possible without applying a relaxed MAT (i.e., increased MAT) as in Method 3 if the number of models transferred at the same time does not exceed only a specific limit. Accordingly, in addition to or in place of Method 3, the following method is proposed.

### Method 4

A model transfer unit (MTU) or a model application unit (MAU) may be defined (in consideration of a device/terminal capable of simultaneously receiving a plurality of models).

A maximum number of MTUs/MAUs that the terminal/device may receive (or transfer-related processing is possible) at the same time/within a predetermined time may be defined/set. The same MAT may be applied for transfer operations for models of a number smaller than the maximum MTU/MAU number.

As an example, a longer MAT may be applied to model transfers beyond the maximum number of MTUs/MAUs (similarly as in Method 3 above). Alternatively, for the model transfers that exceed the maximum number of MTUs/MAUs, some/all of the transfers may not be performed (depending on the priority).

The maximum number of MTUs/MAUs that the terminal/device may receive (or transfer-related processing is possible) at the same time/within the predetermined time may be different for each terminal. In this case, the following embodiment(s) may be considered.

According to an embodiment, information for the maximum number of MTUs/MAUs may be transferred to the base station based on a UE capability report. Specifically, the terminal may transmit UE capability information including the maximum number of MTUs/MAUs to the base station.

According to an embodiment, the maximum number of MTUs/MAUs may be defined as a specific value for all terminals or for each terminal type/class. In this case, the maximum number of MTUs/MAUs may be defined for each function/functionality/use case or for all functions/functionalities/usage cases. As an example, the maximum number of MTUs/MAUs for all functions/functionalities/use cases may be defined as 2. As an example, the maximum number of MTUs/MAUs for each function/functionality/use case may be defined as 1.

In addition to Method 4 above, the following embodiment(s) may be considered without the number of currently occupied MTUs/MAUs or with smaller as a specific number or more (for terminals/devices supporting a maximum number of MTUs/MAUs of a specific number or more).

According to an embodiment, a specific type, a specific id, a specific number of times, and/or a specific number of simultaneous transmissions (e.g. Type 1, ID = 0, two or more times or one simultaneous transmission) may be assumed. This case may be defined/configured to apply a shorter MAT than the other cases. The reason is that MTU/MAU related resources (e.g., memory, hardware/software resources responsible for processing power (e.g., DSP, modem, FPGA, etc.)) may be allocated to the model transfer.

According to an embodiment, in the application of the proposed methods (e.g., at least one of Methods 1 to 4), a process in which the terminal additionally transfers/reports, by considering a case of not performing a transfer/transfers for a specific/all models, to the base station whether the model transfer for the model(s) is completed/not completed may be defined/configured. As an example, the terminal may transmit, to the base station, information indicating whether the model transfer is completed. As an example, based on that the transfer for the specific model/all models is not performed, the terminal may transmit information for the incomplete model transfer to the base station.

According to an embodiment, a transfer/report procedure of information related to the model transfer may be defined.

As an example, the terminal may transfer/report the following i) and/or ii) to the base station.
i) Information for a transferred model of a current terminal/device (e.g., the number of MTUs/MAUs occupied/to be occupied, information of a model being transmitted/transmitted/to be transmitted (e.g. size, type, etc.))
ii) Hardware/software related state information of the terminal/device related to the model transfer (e.g. spare Information of a memory/buffer occupied/to be occupied)

As an example, the above-described transfer/report process may be defined by being included in a model transfer procedure As a specific example, the above-described transfer/report process may be performed in conjunction with the model transfer procedure. The transfer/report process may be performed before the initiation of the model transfer procedure, after the initiation of the model transfer procedure, and/or during the progress of the model transfer procedure.

As an example, the above-described transfer/report process may be defined as a separate from the model transfer procedure. As a specific example, the transfer/report process may be performed based on a separate period/time point from the model transfer procedure. As another specific example, the transfer/report process may be performed separately regardless of whether the model transfer procedure being initiated.

The report may be a NW-initiated report by base station configuration/indication or a UE-initiated reporting based on a specific event. As an example, the specific event may refer to a case where information for the transferred model of the terminal/device or hardware/software related information is changed. As an example, the specific event may refer to a case where a value/number related to the information for the transferred model of the terminal/device or hardware/software is equal to or greater than/equal to smaller than a specific threshold.

The minimum required application time for each type/number of times/number of simultaneous transmissions in the application of the proposed methods (e.g., Method 1, Method 2, Method 3, and Method 4) may be different for each device. For example, in the case of the MAT of the terminal, a procedure of transferring, to the base station, the minimum required MAT for each type/number of times/simultaneous transmission number of the terminal as the UE capability report may be performed. The base station may set, based on the minimum required MAT for each type/number of times/simultaneous transmission number of the terminal, a related value (e.g. application time value for each type/number of times/number of simultaneous transmissions) may be set in the terminal.

In the present disclosure, model data/information for the model transfer (e.g. structure, parameter) may be defined as control plane information or user plane information. Further, the model data/information for the model transfer (e.g. structure and parameter) may be defined as a physical layer (L1)/MAC layer (L2)/RRC layer (L3) message.

In the above-described embodiments, the term "model application time (MAT)" is used for convenience of description, but is not intended to limit the technical idea of the above-described embodiments to the term. For example, the 'MAT' may be replaced with a time related to the model transfer, a minimum time related to the model transfer, a minimum time for the model, a minimum time of application of the model, a processing time related to the model, a minimum processing time related to the model, a time for compile of the model, a minimal time for compile, or a time related to the compile of the model.

The proposed methods (e.g., Method 1, Method 2, Method 3, ad Method 4 may be used/applied together with one or more methods. As an example, an operation related to the model transfer may be performed by the terminal/base station based on at least one of Method 1, Method 2, Method 3, and/or Method 4. As an example, the operation related to the model transfer may be performed by the terminal/base station based on two or more combinations of Method 1, Method 2, Method 3, and/or Method 4.

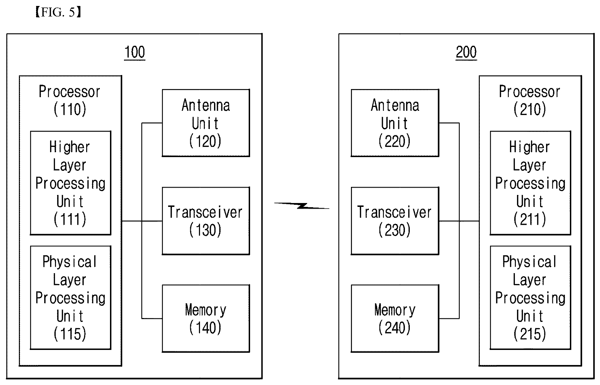

In terms of implementation, the operations (e.g., operations based on at least one of Methods 1 to 4) of the base station/terminal according to the above-described embodiments may be processed by devices (e.g., processors 110 and 210 in FIG. 5) in FIG. 5 to be described below.

Further, the operations (e.g., operations based on at least one of Methods 1 to 4) of the base station/terminal according to the above-described embodiment may be stored in memories (e.g., 140 and 240 in FIG. 5) in the form of an instruction/program (e.g., instruction or executable code) for driving at least one processor (e.g., 110 and 210 in FIG. 5).

Hereinafter, a signaling procedure based on the above-described embodiments will be described.

FIG. 2 illustrates a signaling procedure according to an embodiment of the present disclosure.

FIG. 2 illustrates an example of a signaling between a user equipment (UE) and a network (NW) based on the above-described proposed method. Here, the UE/NW is just an example, and may be replaced and applied with various devices. FIG. 2 is just for convenience of description and does not limit the scope of the present disclosure. Further, some step(s) illustrated in FIG. 2 may be omitted according to a situation and/or a configuration.

The base station belonging to the NW in FIG. 2 may correspond to any entity such as base station (BS), node B, TRP, etc., and the UE may also be replaced with an entity/server which is in charge of a UE-related AI/ML operation instead of the UE.

The UE may perform a procedure S205 of reporting a terminal capability value for an AI/ML model and/or a feature/functionality related thereto to the base station. In this case, the reported terminal capability value including a terminal capability value related to the MAT/MAU/MTU may be reported based on the proposed method (e.g. Method 1, Method 2, Method 3, and Method 4).

The base station may perform configurations for the related function/parameter and/or the AI/ML model based on the terminal capability value reported in S205 (S210). In this process, a configuration value related to the MAT/MAU/MTU may include based on the proposed method (e.g. Method 1, Method 2, Method 3, and Method 4).

Then, a model transfer procedure between the base station and the UE may be performed. A detailed process of the model transfer procedure may be diversified, and FIG. 2 illustrates an embodiment of the procedure. A procedure of initiating the model transfer (S215) may be performed from the base station to the UE or from the UE to the base station. In addition, this procedure may also be omitted. Then, the transfer of the model (data/information) may be performed from the base station to the UE (S220). Although not shown in this example, a response procedure of the UE to an model transfer initiation message of the base station, and/or a response procedure of the UE to the model transfer of the base station may be included in the model transfer procedure.

After the model transfer, the UE may assume that deployment/activation/application of the model is completed after the MAT time point defined/configured based on the proposed methods of the present disclosure (e.g., Method 1, Method 2, Method 3, and Method 4), and after the time point, the base station may perform a procedure (S225) of activating/triggering the functionality (e.g., CSI reporting, beam reporting, and positioning related signaling) to the UE.

As mentioned above, the above-described NW/UE signaling and operation may be implemented by devices to be described below (in FIG. 5). For example, the NW (or base station) may correspond to a first wireless device and the UE may correspond to a second wireless device and in some cases, an opposite case thereto may also be considered.

For example, the above-described NW/UE signaling and operation may be processed by one or more processors 110 and 210 of FIG. 5, and the above-described NW/UE signaling and operation may be stored in memories 140 and 240 in the form of an instruction/program (e.g. instruction, executable code) for driving at least one processor 110 or 210 in FIG. 5.

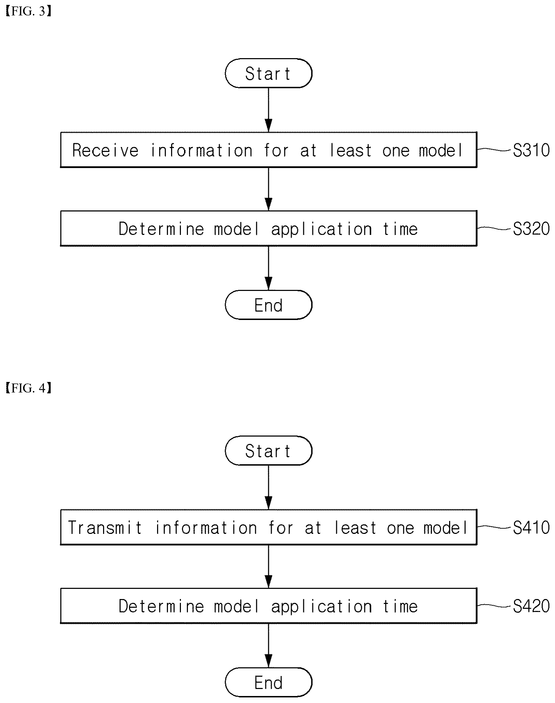

Hereinafter, the above-described embodiments will be described in detail with reference to FIGS. 3 and 4 in terms of the operations of the first device and the second device. Methods to be described below are just distinguished for convenience of description and it is needless to say that some components of any one method may be substituted with some components of another method or may be applied in combination with each other. Hereinafter, the first device may refer to a subject receiving the model in a procedure related to the model transfer, and the second device may refer to a subject transferring the model in the procedure related to the model transfer. The first apparatus may be the UE, the base station, or a first UE, and the second device may be the base station, the UE, or a second UE.

As an example, the base station may transfer a model (and/or information for the model) to the UE. As an example, the UE may transfer a model (and/or information for the model) to the base station. As an example, the second UE may transfer a model (and/or information for the model) to the first UE.

FIG. 3 is a flowchart for describing a method performed by a first device according to an embodiment of the present disclosure.

Referring to FIG. 3, a method performed by a first device according to an embodiment of the present disclosure includes receiving information for at least one model (S310) and determining a model application time point (S320).

In S310, the first device receives information for at least one model from the second device.

The information about the at least one model may be based on information related to the model transfer described above.

In S320, the first device determines a model application time (MAT) related to the at least one model.

A time point at which an operation/functionality based on the at least one model may be triggered/initiated/performed may be determined by the MAT.

As an example, the first device may expect to receive, from the second device, information related to triggering/indication of the operation/functionality based on the at least one model after the MAT.

The MAT may refer to a time related to model application/activation/preparation. Hereinafter, this will be specifically described.

According to an embodiment, the MAT is a time related to a time (e.g., a second time point) from a reference time point (e.g., a first time point) to a time point at which validation, testing, application, deployment, or compilation of the at least one model is completed by the first device.

As an example, the MAT may be defined/configured/indicated to be equal to or greater than the time from the first time point to the second time point. As an example, the MAT may be defined/configured/indicated as a time including the time from the first time point to the second time point.

As an example, the reference time point may be i) a time point at which a model transfer procedure is triggered or initiated by the second device, ii) a time point at which the first device transmits a response to the triggering of the model transfer procedure, iii) a time point at which the transmission of the information is initiated, iv) a time point at which the transmission of information is completed, or v) a time point at which the first device transmits a response to the reception of the information.

According to an embodiment, the MAT may be a time required for the first device to activate, apply or prepare a model or a function related to the model.

The MAT may be determined based on at least one of Methods 1 to 4 described above.

Specifically, the MAT may be determined based on at least one of i) a model transfer type, ii) a number of model transfers, iii) a number of the at least one model, and/or iv) a model transfer unit.

As an example, the model transfer type may be defined based on whether the information including information for a structure related to the at least one model.

The information may include information for a parameter related to the at least one model based on the model transfer type being a first type.

The information may include i) information for the parameter and ii) information for the structure based on the model transfer type being a second type.

The MAT related to the second type may be greater than the MAT related to the first type. The embodiment may be based on Method 1.

As an example, the number of model transfers may be related to whether the transfer of the at least one model based on the information being an initial transfer. The MAT related to the initial transfer may be greater than the MAT related to the number of model transfers which is 2 or more. The embodiment may be based on Method 2.

As an example, based on the number of the at least one model being greater than a defined number, the MAT may be determined based on a priority related to each model. The embodiment may be based on Method 3. The priority may be defined based on at least one of i) a start time point of a model transfer related to each model, ii) a functionality related to each model, iii) the model transfer type, iv) the number of model transfers, and/or v) an ID of each model.

As an example, the model transfer unit may be related to the number of models which may be simultaneously transferred to the first device. The MAT may be determined as a first MAT based on the number of the at least one model which is smaller than or equal to the model transfer unit. The MAT may be determined as a second MAT based on the number of the at least one model which is greater than the model transfer unit. The second MAT may be greater than the first MAT. The embodiment may be based on Method 4.

The MAT may be defined/configured/determined/indicated based on a capability of the first device. The embodiments related thereto will be specifically described.

According to an embodiment, the method may further include a minimum MAT reporting step and an MAT receiving step. Hereinafter, this will be specifically described.

In the minimum MAT reporting step, the first device reports information for a minimum MAT supported by the first device to the second device. The minimum MAT reporting step may be performed before S310.

As an example, the information for the minimum MAT may be reported based on an existing UE capability transfer procedure. Specifically, the first device may transmit, to the second device, capability information including the information for the minimum MAT supported by the first device.

In the MAT receiving step, the first device receives information related to the MAT from the second device. The MAT receiving step may be performed before S310 or S320. The MAT may be greater than or equal to the minimum MAT.

As an example, the first device may determine the MAT based on the information related to the MAT. Specifically, the MAT determined based on at least one of i) a model transfer type, ii) a number of model transfers, iii) a number of the at least one model, and/or iv) a model transfer unit may be configured/indicated by the information related to the MAT.

As an example, one or more MATs may be configured/indicted based on the information related to the MAT. The first device may determine the MAT among the one or more MATs.

That is, the MAT may be determined based on at least one of i) a model transfer type, ii) a number of model transfers, iii) a number of the at least one model, and/or iv) a model transfer unit among the one or more MATs.

Specific examples of the one or more MATs are as follows.
1) MAT(s) for each model transfer type
2) MAT(s) for each number of models transferred at the same time (e.g., an MAT when the number of the at least one model is smaller than or equal to a model transfer unit, an MAT when the number of the at least one model is greater than the model transfer unit, etc.)
3) MAT(s) based on the model transfer type and the number of models transferred simultaneously (e.g., an MAT per number transferred simultaneously in model transfer of Type1 (or Type2))
4) MAT(s) based on a model transfer type related to an initial transfer and/or the number of simultaneously transferred models
5) MAT(s) based on a model transfer type related to two or more transfers (e.g., model update) and/or the number of simultaneously transferred models

The one or more MATs may be based on at least one of the above-described examples 1) to 5). The operations based on S310 and 320, the minimum MAT reporting step, and the MAT receiving step described above may be implemented by the device in FIG. 5. For example, the first device 100/200 may control one or more transceivers 130/230 and/or one or more memories 140/240 to perform the operations based on S310, S320, the minimum MAT reporting step, and the MAT receiving step.

Hereinafter, the embodiments described above will be specifically described in terms of the operation of the second device.

S410, S420, a minimum MAT receiving step, and an MAT transmitting step, which will be described below, correspond to S310, S320, the minimum MAT reporting step, and the MAT receiving step described with reference to FIG. 3. By considering the correspondence relationship, redundant descriptions are omitted. That is, a specific description of an operation of the second device described below may be replaced with the description/embodiment of FIG. 3 corresponding to the operation.

FIG. 4 is a flowchart for describing a method performed by a second device according to another embodiment of the present disclosure.

Referring to FIG. 4, the method performed by the second device according to another embodiment of the present disclosure includes transmitting information for at least one model (S410) and determining a model application time point (S420).

In S410, the second device receives information for at least one model to the first device.

In S420, the second device determines a model application time (MAT) related to the at least one model.

A time point at which an operation/functionality based on the at least one model may be triggered/initiated/performed may be determined by the MAT.

As an example, the second device may transmit, to the first device, information related to triggering/indication of the operation/functionality based on the at least one model after the MAT.

The method may further include a minimum MAT receiving step and an MAT transmitting step.

In the minimum MAT receiving step, the second device receives information for a minimum MAT supported by the first device from the first device. The minimum MAT receiving step may be performed after S410.

In the MAT transmitting step, the second device transmits information related to the MAT to the first device. The MAT transmitting step may be performed before S410 or S420.

The operations based on S410 and S420, the minimum MAT receiving step, and the MAT transmitting step described above may be implemented by the devices in FIG. 5. For example, the second device 100/200 may control one or more transceivers 130/230 and/or one or more memories 140/240 to perform the operations based on S410, S420, the minimum MAT receiving step, and the MAT transmitting step.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a first device in a wireless communication system, the method comprising:
receiving information for at least one model from a second device; and
determining a model application time (MAT) related to the at least one model,
wherein the MAT is determined based on at least one of i) a model transfer type, ii) a number of model transfers, iii) a number of the at least one model, and/or iv) a model transfer unit.

2. The method of claim 1, wherein the MAT is a time related to a time from a reference time point to a time point at which validation, testing, application, deployment, or compilation of the one or models is completed by the first device.

3. The method of claim 2, wherein the reference time point is i) a time point at which a model transfer procedure is triggered or initiated by the second device, ii) a time point at which the first device transmits a response to the triggering of the model transfer procedure, iii) a time point at which the transmission of the information is initiated, iv) a time point at which the transmission of information is completed, or v) a time point at which the first device transmits a response to the reception of the information.

4. The method of claim 1, wherein the MAT is a time required for the first device to activate, apply or prepare a model or a function related to the model.

5. The method of claim 1, further comprising:
reporting, to the second device, information for a minimum MAT supported by the first device; and
receiving information related to the MAT from the second device.

6. The method of claim 5, wherein the MAT is greater than or equal to the minimum MAT.

7. The method of claim 1, wherein the model transfer type is defined based on whether the information includes information for a structure related to the one or models.

8. The method of claim 7, wherein the information includes information for a parameter related to the one or models based on the model transfer type being a first type, and
wherein the information includes i) information for the parameter and ii) information for the structure based on the model transfer type being a second type.

9. The method of claim 8, wherein the MAT related to the second type is greater than the MAT related to the first type.

10. The method of claim 1, wherein the number of model transfers is related to whether the transfer of the at least one model based on the information being an initial transfer.

11. The method of claim 10, wherein the MAT related to the initial transfer is greater than the MAT related to the number of model transfers which is 2 or more.

12. The method of claim 1, wherein based on the number of the at least one model being greater than a defined number, the MAT is determined based on a priority related to each model.

13. The method of claim 12, wherein the priority is defined based on at least one of i) a start time point of a model transfer related to each model, ii) a functionality related to each model, iii) the model transfer type, iv) the number of model transfers, and/or v) an ID of each model.

14. The method of claim 1, wherein the model transfer unit is related to the number of models which may be simultaneously transferred to the first device.

15. The method of claim 14, wherein the MAT is determined as a first MAT based on the number of the at least one model which is smaller than or equal to the model transfer unit,
wherein the MAT is determined as a second MAT based on the number of the at least one model which is greater than the model transfer unit, and
wherein the second MAT is greater than the first MAT.

16. A first device operating in a wireless communication system, the first device comprising:
one or more transceivers;
one or more processors; and
one or more memories connected to the one or more processors and storing instructions,
wherein the instructions configure the one or more processors to perform all steps of a method according to any one of claims 1 to 15 based on being executed by the one or more processors.

17. A device comprising:
one or more memories; and
one or more processors operably connected to the one or more memories,
wherein the one or more memories store instructions that configure the one or more processors to perform all steps of a method according to any one of claims 1 to 15 based on being executed by the one or more processors.

18. One or more non-transitory computer readable mediums storing instructions,
wherein the instructions executable by one or more processors configure the one or more processors to perform all steps of a method according to any one of claims 1 to 15.

19. A method performed by a second device in a wireless communication system, the method comprising:
transmitting information related to at least one more models to a first device; and
determining a model application time (MAT) related to the at least one model,
wherein the MAT is determined based on at least one of i) a model transfer type, ii) a number of model transfers, iii) a number of the at least one model, and/or iv) a model transfer unit.

20. A second device operating in a wireless communication system, the second device comprising:
one or more transceivers;
one or more processors; and
one or more memories connected to the one or more processors and storing instructions,
wherein the instructions configure the one or more processors to perform all steps of a method according to claim 19 based on being executed by the one or more processors.
